# EUROPEAN PATENT APPLICATION

(11) **EP 4 614 495 A1**
(43) Date of publication of application: **10.09.2025**
(21) Application number: 23893133.1
(22) Date of filing: 28.06.2023
(51) Int. Cl.: G10L 15/26, G10L 15/08

(54) **SPEECH RECOGNITION METHOD AND APPARATUS**

(30) Priority: 24.11.2022 CN 202211484714
(71) Applicant: Huawei Cloud Computing Technologies Co., Ltd., Guiyang, Guizhou 550025 (CN)
(72) Inventor: ZHOU, Ming, Guiyang, Guizhou 550025 (CN); LIU, Chenfan, Guiyang, Guizhou 550025 (CN)
(74) Representative: Goddar, Heinz J.
(86) International application number: PCT/CN2023/103177
(87) International publication number: WO 2024/109033

(57) **Abstract**

A speech recognition method and apparatus are provided. The method is applied to a cloud management platform. The speech recognition method includes: The cloud management platform obtains a to-be-recognized speech of a user (410); the cloud management platform obtains a hot word list of the user, where the hot word list of the user is generated by combining a plurality of hot word sublists, and different hot word sublists correspond to different relationship features of the user (430); and the cloud management platform performs speech recognition on the to-be-recognized speech based on the hot word list (450). The hot word list is generated by combining the plurality of hot word sublists corresponding to the different relationship features of the user. Therefore, invalid hot words are reduced, and speech recognition efficiency can be improved without reducing recognition accuracy.

## Description

This application claims priority to Chinese Patent Application No. 202211484714.5, filed with the China National Intellectual Property Administration on November 24, 2022 and entitled "SPEECH RECOGNITION METHOD AND APPARATUS", which is incorporated herein by reference in its entirety.

### TECHNICAL FIELD

Embodiments of this application relate to the artificial intelligence field, and more specifically, to a speech recognition method and apparatus, a computing device cluster, a computer program product, and a computer-readable storage medium.

### BACKGROUND

With development of artificial intelligence, speech recognition technologies have been applied to various industries and fields. Currently, a universal speech recognition model has good recognition effect for common words, but has low recognition accuracy for special words, such as person names, product names, company names, or service keywords in some special scenarios. To improve speech recognition effect for the special words, a user may preset a hot word list, and hot words in the hot word list include the special words or can be used to recognize the special words. In a speech recognition process, the hot word list can improve recognition accuracy for the special words.

For example, a segment of input speech includes "Zhang San", and the user actually refers to an object named "Zhang San". Therefore, the user expects that the name "Zhang San" is output through speech recognition. If no hot word list is set, an incorrect name "Zhangsan" may be output. On the contrary, if a hot word list with a hot word "Zhang San" is provided, "Zhang San" can be output, that is, the speech "Zhang San" can be correctly recognized.

As a service volume increases, the hot word list preset by the user includes a large quantity of hot words. However, the large quantity of hot words greatly reduce speech recognition efficiency.

### SUMMARY

This application provides a speech recognition method and apparatus, a computing device cluster, a computer program product, and a computer-readable storage medium. The method includes generating a hot word list by combining a plurality of hot word sublists corresponding to different relationship features of a user, and performing speech recognition based on the hot word list. Speech recognition efficiency can be improved without reducing speech recognition accuracy.

According to a first aspect, a speech recognition method is provided. The method is applied to a cloud management platform, and the method includes: The cloud management platform obtains a to-be-recognized speech of a user; the cloud management platform obtains a hot word list of the user, where the hot word list of the user is generated by combining a plurality of hot word sublists, and different hot word sublists correspond to different relationship features of the user; and the cloud management platform performs speech recognition on the to-be-recognized speech based on the hot word list.

If a hot word list that simply includes all hot words is used, as a service volume of the user increases, a quantity of hot words in the hot word list also increases. When the user performs speech recognition, speech recognition result matching needs to be performed on all the hot words in the hot word list. This greatly reduces a speech recognition speed. In this embodiment of this application, the hot word list is generated based on the relationship feature of the user, so that invalid hot words are reduced, and speech recognition efficiency can be improved without reducing recognition accuracy.

The relationship feature may be a set of interpersonal relationships established between the user and other persons due to work or the like. For example, the relationship feature may include a personal relationship network of the user or a department, a workgroup, a company, or the like to which the user belongs. In this way, different relationship features may indicate close and distant relationships with the user, so that corresponding hot word sublists may indicate hot word probabilities at different levels for the user. A hot word list generated by combining such hot word sublists can effectively screen out an invalid hot word that is not closely related to the user, thereby effectively reducing a quantity of hot words in the hot word list, and improving speech recognition efficiency.

With reference to the first aspect, in some implementations of the first aspect, the plurality of hot word sublists include a first-level hot word sublist and a second-level hot word sublist, and when the hot word list of the user is generated through combination, the first-level hot word sublist takes precedence over the second-level hot word sublist.

The hot word sublists may have different priorities. After being combined into the hot word list, a hot word in a hot word sublist with a higher priority is preferentially retained, or has a higher probability value or weight value. In this way, a quantity of invalid hot words can be further reduced. As a service volume of the user increases, a quantity of hot words in the hot word list also increases, and same-pronunciation hot words may occur in the hot word list. During speech recognition, the same-pronunciation hot words may conflict with each other, and speech recognition accuracy is reduced. In embodiments of this application, priorities of the plurality of hot word sublists are determined based on the different relationship features, thereby avoiding a conflict between same-pronunciation hot words. For example, if interaction between the user and a colleague "Zhang San" (which, for example, belongs to the first-level hot word sublist) in a same department is much more than interaction between the user and a colleague "Zhangsan" (which, for example, belongs to the second-level hot word sublist) in another department in a same enterprise, when the two hot word sublists are combined, only the hot word "Zhang San" may be retained, or a probability value or a weight value of the hot word "Zhang San" may be made greater than that of the hot word "Zhangsan". In this way, speech recognition accuracy is improved, and speech recognition efficiency is further improved.

With reference to the first aspect, in some implementations of the first aspect, that different hot word sublists correspond to different relationship features of the user includes: The first-level hot word sublist corresponds to the personal relationship network of the user, and the second-level hot word sublist corresponds to a first group to which the user belongs.

The personal relationship network is a network that has a closest personal relationship with the user. Therefore, an occurrence probability of a hot word related to the personal relationship network is the highest in the speech. For example, in a specific period of time, a quantity of other persons that the user has contacted is limited, and information about the other persons is usually a result that the user expects to output through speech recognition. Therefore, a higher priority should be set. For example, the information about the other persons may include a name, a nickname, an address, and the like, and may also include a keyword used when the user communicates with the other persons. For another example, personal life or work of the user relates to some common proper nouns such as a personal address, an office address, and a common work phrase. Such information is also a result that the user expects to output through speech recognition, and therefore has a higher priority. In addition, service information or a member name of a group to which the user belongs is also usually a result that the user expects to output through speech recognition, for example, a group name (such as a marketing department or a sales department), a floor on which the group is located, or a name of another department that frequently communicates with the group. In embodiments of this application, the first-level hot word sublist is determined based on the personal relationship network of the user, and the second-level hot word sublist is determined based on the first group to which the user belongs. This can also reduce invalid hot words, and improve speech recognition efficiency.

With reference to the first aspect, in some implementations of the first aspect, the method further includes: The cloud management platform analyzes the personal relationship network of the user by using a clustering algorithm and/or a keyword obtaining algorithm, to determine the first-level hot word sublist.

The personal relationship network of the user is analyzed by using the clustering algorithm (for example, the k-means algorithm) and/or the keyword obtaining algorithm (for example, the TF-IDF algorithm), to obtain a proper noun of another person that is closely related to the user in a specific period of time, for example, a person name, a personal address, an office address, or a common work phrase. Such information is also a result that the user expects to output through speech recognition. In this way, speech recognition accuracy can be improved, invalid hot words can be reduced, and speech recognition efficiency can be improved.

With reference to the first aspect, in some implementations of the first aspect, the method further includes: The cloud management platform analyzes, by using the keyword obtaining algorithm, a communication record of the first group to which the user belongs, to determine the second-level hot word sublist.

The communication record of the first group to which the user belongs is analyzed by using the keyword obtaining algorithm (for example, the TF-IDF algorithm), to obtain keywords such as a service term, a person name, and a group name that are closely related to the user. Because the first group to which the user belongs is closely related to the user, these keywords are usually a result that the user expects to output through speech recognition. In this way, speech recognition accuracy can be improved, invalid hot words can be reduced, and speech recognition efficiency can be improved.

With reference to the first aspect, in some implementations of the first aspect, the method further includes: The cloud management platform receives a maintenance instruction of an administrator of the first group for the second-level hot word sublist; and the cloud management platform maintains the second-level hot word sublist based on the maintenance instruction.

The second-level hot word sublist is maintained by the administrator of the first group, so that the second-level hot word sublist includes hot words such as a service term, a person name, and a group name that are more commonly used by a user in the first group in actual work or life, so that speech recognition accuracy is improved, invalid hot words are reduced, and speech recognition efficiency is improved.

With reference to the first aspect, in some implementations of the first aspect, that different hot word sublists correspond to different relationship features of the user includes: The first-level hot word sublist corresponds to a second group to which the user belongs, the second-level hot word sublist corresponds to a third group to which the user belongs, and the second group is a proper subset of the third group.

Service information or a member name of a group to which the user belongs is usually a result that the user expects to output through speech recognition, for example, a group name (such as a marketing department or a sales department), a floor on which the group is located, or a name of another department that frequently communicates with the group. In this embodiment of this application, the first-level hot word sublist is determined based on the second group to which the user belongs, and the second-level hot word sublist is determined based on the third group to which the user belongs, so that invalid hot words are reduced, and speech recognition efficiency can be improved without reducing speech recognition accuracy.

According to a second aspect, a speech recognition apparatus is provided. The apparatus is used in a cloud management platform, and the apparatus includes: an obtaining module, configured to obtain a to-be-recognized speech of a user and a hot word list of the user, where the hot word list of the user is generated by combining a plurality of hot word sublists, and different hot word sublists correspond to different relationship features of the user; and a recognition module, configured to perform speech recognition on the to-be-recognized speech based on the hot word list.

If a hot word list that simply includes all hot words is used, as a service volume of the user increases, a quantity of hot words in the hot word list also increases. When the user performs speech recognition, speech recognition result matching needs to be performed on all the hot words in the hot word list. This greatly reduces a speech recognition speed. In this embodiment of this application, the hot word list is generated based on the relationship feature of the user, so that invalid hot words are reduced, and speech recognition efficiency can be improved without reducing recognition accuracy.

Different relationship features may indicate close and distant relationships with the user, so that corresponding hot word sublists may indicate hot word probabilities at different levels for the user. A hot word list generated by combining such hot word sublists can effectively screen out an invalid hot word that is not closely related to the user, thereby effectively reducing a quantity of hot words in the hot word list, and improving speech recognition efficiency.

With reference to the second aspect, in some implementations of the second aspect, the plurality of hot word sublists include a first-level hot word sublist and a second-level hot word sublist, and when the obtaining module generates the hot word list of the user through combination, the first-level hot word sublist takes precedence over the second-level hot word sublist.

The hot word sublists may have different priorities. After being combined into the hot word list, a hot word in a hot word sublist with a higher priority is preferentially retained, or has a higher probability value or weight value. In this way, a quantity of invalid hot words can be further reduced. As a service volume of the user increases, a quantity of hot words in the hot word list also increases, and same-pronunciation hot words may occur in the hot word list. During speech recognition, the same-pronunciation hot words may conflict with each other, and speech recognition accuracy is reduced. In embodiments of this application, priorities of the plurality of hot word sublists are determined based on the different relationship features, thereby avoiding a conflict between same-pronunciation hot words. For example, if interaction between the user and a colleague "Zhang San" (which, for example, belongs to the first-level hot word sublist) in a same department is much more than interaction between the user and a colleague "Zhangsan" (which, for example, belongs to the second-level hot word sublist) in another department in a same enterprise, when the two hot word sublists are combined, only the hot word "Zhang San" may be retained, or a probability value or a weight value of the hot word "Zhang San" may be made greater than that of the hot word "Zhangsan". In this way, speech recognition accuracy is improved, and speech recognition efficiency is further improved.

With reference to the second aspect, in some implementations of the second aspect, the first-level hot word sublist corresponds to a personal relationship network of the user, and the second-level hot word sublist corresponds to a first group to which the user belongs.

The personal relationship network is a network that has a closest personal relationship with the user. Therefore, an occurrence probability of a hot word related to the personal relationship network is the highest in the speech. For example, in a specific period of time, a quantity of other persons that the user has contacted is limited, and information about the other persons is usually a result that the user expects to output through speech recognition. Therefore, a higher priority should be set. For example, the information about the other persons may include a name, a nickname, an address, and the like, and may also include a keyword used when the user communicates with the other persons. For another example, personal life or work of the user relates to some common proper nouns such as a personal address, an office address, and a common work phrase. Such information is also a result that the user expects to output through speech recognition, and therefore has a higher priority. In addition, service information or a member name of a group to which the user belongs is also usually a result that the user expects to output through speech recognition, for example, a group name (such as a marketing department or a sales department), a floor on which the group is located, or a name of another department that frequently communicates with the group. In embodiments of this application, the first-level hot word sublist is determined based on the personal relationship network of the user, and the second-level hot word sublist is determined based on the first group to which the user belongs. This can also reduce invalid hot words, and improve speech recognition efficiency.

With reference to the second aspect, in some implementations of the second aspect, the obtaining module is further configured to analyze the personal relationship network of the user by using a clustering algorithm and/or a keyword obtaining algorithm, to determine the first-level hot word sublist.

The personal relationship network of the user is analyzed by using the clustering algorithm (for example, the k-means algorithm) and/or the keyword obtaining algorithm (for example, the TF-IDF algorithm), to obtain a proper noun of another person that is closely related to the user in a specific period of time, for example, a person name, a personal address, an office address, or a common work phrase. Such information is also a result that the user expects to output through speech recognition. In this way, speech recognition accuracy can be improved, invalid hot words can be reduced, and speech recognition efficiency can be improved.

With reference to the second aspect, in some implementations of the second aspect, the obtaining module is further configured to analyze, by using the keyword obtaining algorithm, a communication record of the first group to which the user belongs, to determine the second-level hot word sublist.

The communication record of the first group to which the user belongs is analyzed by using the keyword obtaining algorithm (for example, the TF-IDF algorithm), to obtain keywords such as a service term, a person name, and a group name that are closely related to the user. Because the first group to which the user belongs is closely related to the user, these keywords are usually a result that the user expects to output through speech recognition. In this way, speech recognition accuracy can be improved, invalid hot words can be reduced, and speech recognition efficiency can be improved.

With reference to the second aspect, in some implementations of the second aspect, the speech recognition apparatus further includes: a receiving module, configured to receive a maintenance instruction of an administrator of the first group for the second-level hot word sublist; and the obtaining module is further configured to maintain the second-level hot word sublist based on the maintenance instruction.

The second-level hot word sublist is maintained by the administrator of the first group, so that the second-level hot word sublist includes hot words such as a service term, a person name, and a group name that are more commonly used by a user in the first group in actual work or life, so that speech recognition accuracy is improved, invalid hot words are reduced, and speech recognition efficiency is improved.

With reference to the second aspect, in some implementations of the second aspect, that different hot word sublists correspond to different relationship features of the user includes: The first-level hot word sublist corresponds to a second group to which the user belongs, the second-level hot word sublist corresponds to a third group to which the user belongs, and the second group is a proper subset of the third group.

Service information or a member name of a group to which the user belongs is usually a result that the user expects to output through speech recognition, for example, service information or a member name of a group to which the user belongs is usually a result that the user expects to output through speech recognition, for example, a group name (such as a marketing department or a sales department), a floor on which the group is located, or a name of another department that frequently communicates with the group. In this embodiment of this application, the first-level hot word sublist is determined based on the second group to which the user belongs, and the second-level hot word sublist is determined based on the third group to which the user belongs, so that invalid hot words are reduced, and speech recognition efficiency can be improved without reducing speech recognition accuracy.

According to a third aspect, a computing device is provided, including a processor and a memory. The processor is configured to execute instructions stored in the memory, so that the computing device performs the speech recognition method in the first aspect or any implementation of the first aspect.

According to a fourth aspect, a computing device cluster is provided, including at least one computing device. Each computing device includes a processor and a memory. A processor of the at least one computing device is configured to execute instructions stored in a memory of the at least one computing device, so that the computing device cluster performs the speech recognition method in the first aspect or any implementation of the first aspect.

According to a fifth aspect, a computer program product including instructions is provided. When the instructions are run by a computing device, the computing device is enabled to perform the speech recognition method in the first aspect or any implementation of the first aspect.

According to a sixth aspect, a computer program product including instructions is provided. When the instructions are run by a computing device cluster, the computing device cluster is enabled to perform the speech recognition method in the first aspect or any implementation of the first aspect.

According to a seventh aspect, a computer-readable storage medium is provided, including computer program instructions. When the computer program instructions are executed by a computing device, the computing device performs the speech recognition method in the first aspect or any implementation of the first aspect.

According to an eighth aspect, a computer-readable storage medium is provided, including computer program instructions. When the computer program instructions are executed by a computing device cluster, the computing device cluster performs the speech recognition method in the first aspect or any implementation of the first aspect.

### BRIEF DESCRIPTION OF DRAWINGS

FIG. 1 is a diagram of an application scenario of a speech recognition method according to an embodiment of this application;
FIG. 2 is a diagram of a system based on a cloud server according to an embodiment of this application;
FIG. 3 is a block diagram of a speech recognition device according to an embodiment of this application;
FIG. 4 is a schematic flowchart of a speech recognition method according to an embodiment of this application;
FIG. 5 is a schematic flowchart of a method for analyzing a personal relationship network of a user based on a clustering algorithm according to an embodiment of this application;
FIG. 6 is a block diagram of a speech recognition apparatus according to an embodiment of this application;
FIG. 7 is a diagram of a speech recognition system architecture and an application procedure of the system architecture according to an embodiment of this application;
FIG. 8 is a diagram of an architecture of a computing device 800 according to an embodiment of this application;
FIG. 9 is a diagram of an architecture of a computing device cluster according to an embodiment of this application; and
FIG. 10 is a diagram in which computing devices 800A and 800B are connected via a network according to an embodiment of this application.

### DESCRIPTION OF EMBODIMENTS

The following describes technical solutions of this application with reference to accompanying drawings.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

For ease of understanding this application, the following first describes terms in this application.

Hot word list: A speech recognition algorithm usually has low recognition accuracy for special words, such as person names, product names, company names, or service keywords in some special scenarios. When speech recognition is invoked, the special words are added to a word list, to improve probability weights of the special words in a speech recognition process, thereby effectively improving recognition accuracy of the words. The word list is referred to as a hot word list.

Invalid hot word: For a user, some hot words in a hot word list have a relatively low association degree with the user, and are less likely to play a role in a speech recognition process of the user. These hot words may be referred to as invalid hot words. For example, in a company, a department A and a department B have few service intersections. For a user in the department A, hot words such as a service keyword and a department member name of the department B may be referred to as invalid hot words.

Artificial intelligence (artificial intelligence, AI) is a theory, a method, a technology, and an application system that simulate and extend human intelligence by using a digital computer or a machine controlled by a digital computer, to perceive an environment, obtain knowledge, and use the knowledge to obtain an optimal result. In other words, artificial intelligence is a branch in computer science, and aims to understand the essence of intelligence and produce a new intelligent machine that can react in a manner similar to human intelligence. Artificial intelligence is to study design principles and implementation methods of various intelligent machines, so that the machines have perception, inference, and decision-making functions. Research in the field of artificial intelligence includes robotics, natural language processing, computer vision, speech processing technologies, decision-making and inference, human-machine interaction, recommendation and search, AI basic theories, and the like.

A goal of an automatic speech recognition (automatic speech recognition, ASR) technology is to convert word content in a human speech into a computer-readable input, such as a button, a binary code, or a character sequence. Related fields include: signal processing, mode recognition, a probability theory and an information theory, a vocal mechanism and an auditory mechanism, artificial intelligence, and the like.

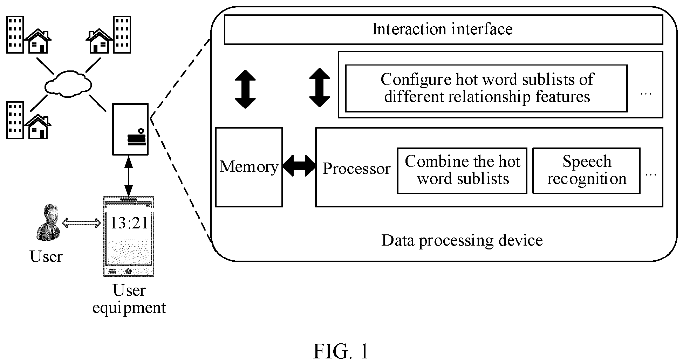

To better understand the solutions in embodiments of this application, a possible application scenario of embodiments of this application is first briefly described below with reference to FIG. 1.

FIG. 1 is a diagram of an application scenario of a speech recognition method. The application scenario may include user equipment and a data processing device. The user equipment may include a smart terminal such as a mobile phone, a personal computer, or an information processing center. Generally, the user equipment may be used as an initiator of a speech recognition instruction.

Optionally, the data processing device may be a device or a server that has a data processing function, for example, a cloud server, a network server, an application server, or a management server. The data processing device receives the speech recognition instruction from the user equipment through an interaction interface, and then performs data processing by using a memory that stores a hot word list and a processor that is configured to recognize a speech. The data processing device may further receive a configuration instruction from the user equipment through the interaction interface, where the instruction may be used to configure hot word sublists of different relationship features. These hot word sublists may be stored in the memory, and the processor may further combine the hot word sublists to obtain a hot word list. The hot word list may be stored in the memory.

It should be understood that the memory in the data processing device may be a general term, and may be a local storage device that stores historical data or a storage manager in a database.

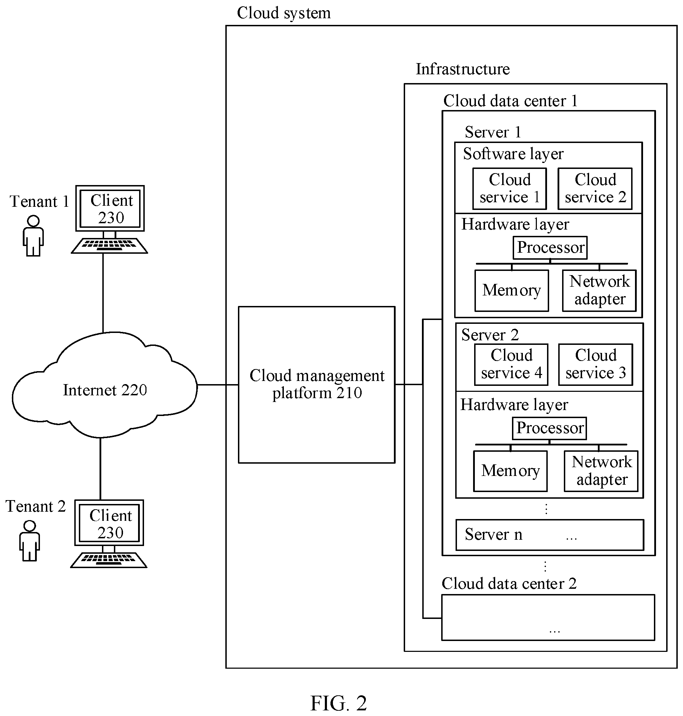

FIG. 2 is a diagram of a system based on a cloud server system according to an embodiment of this application. As shown in FIG. 2, a cloud management platform 210 is configured to manage an infrastructure that provides a plurality of cloud services. The infrastructure includes a plurality of cloud data centers, each cloud data center includes a plurality of servers, and each server includes a cloud service resource to provide a corresponding cloud service for a tenant.

The cloud management platform 210 provides an access interface (such as an interface or an application programming interface (application programming interface, API)). The tenant can operate a client to remotely access the access interface to register a cloud account and a password on the cloud management platform and log in to the cloud management platform. After the cloud account and the password are successfully authenticated by the cloud management platform, the tenant can further pay to select and purchase a virtual machine of a specific specification (processor, memory, or disk) on the cloud management platform. After the purchasing with payment succeeds, the cloud management platform provides a remote login account and password of the purchased virtual machine, and the client can remotely log in to the virtual machine, and install and run an application of the tenant on the virtual machine. The tenant of the cloud service may be an individual, an enterprise, a school, a hospital, an administration, or the like.

Functions of the cloud management platform 210 include but are not limited to a user console, a computing management service, a network management service, a storage management service, an authentication service, and an image management service. The user console provides an interface or an API to interact with a tenant. The computing management service is used for managing a bare metal server and a server running a virtual machine and a container. The network management service is used for managing a network service (such as a gateway and a firewall). The storage management service is used for managing a storage service (such as a data bucket service). The authentication service is used for managing an account and a password of a tenant. The image management service is used for managing a virtual machine image. The tenant may log in to the cloud management platform 210 by using a client 230 over the internet 220, to manage a leased cloud service.

For example, an administrator of the tenant may configure, by using the cloud management platform 210, hot word sublists of different relationship features such as an individual, a department, a workgroup, and a company. The tenant may send a speech recognition instruction to the cloud management platform 210 by using the client, and the cloud management platform 210 schedules the infrastructure based on the speech recognition instruction, so that speech recognition is implemented.

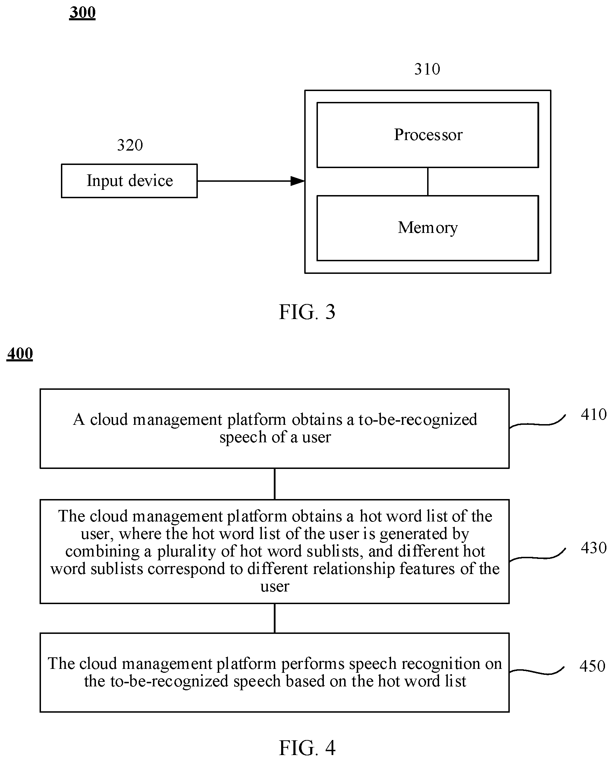

FIG. 3 is a diagram of a speech recognition device according to an embodiment of this application. As shown in FIG. 3, the speech recognition device 310 is communicatively connected to an input device 320. The input device 320 captures a speech of a user, and inputs the to-be-recognized speech to the speech recognition device 310 in a form of an electrical signal or another signal. The speech recognition device 310 may perform speech recognition on the input to-be-recognized speech.

The device structure in FIG. 3 is merely an example, and does not constitute a limitation on a scenario to which embodiments of this application can be applied. For example, the speech recognition device 310 and the input device 320 may be different devices. For example, the input device 320 is a speech capturing and preprocessing apparatus such as a microphone, captures a speech input by a user, and converts the speech into an electrical signal or another signal. The speech recognition device 310 may be a local or remote server, and is configured to store and process a signal sent by the input device 320. For another example, the speech recognition device 310 and the input device 320 may be implemented on a same apparatus, and the apparatus may capture and recognize a speech signal. The speech signal may be processed in real time, or may be processed after a period of time. This is not limited in embodiments of this application.

The input device 320 may input one segment of speech, or may input a plurality of segments of speeches at the same time. This is not limited in embodiments of this application.

The speech recognition device 310 may be a device or system having an information processing capability, for example, a computer or a server. Specifically, the speech recognition device 310 may include a processor, configured to implement information processing, for example, recognize a speech by using the technical solutions in embodiments of this application. The processor may be any type of processor, for example, a dedicated processor or a general-purpose processor. This is not limited in embodiments of this application.

The speech recognition device 310 may further include a memory. The memory may be configured to store information and instructions, for example, computer-executable instructions for implementing the technical solutions in embodiments of this application. The memory may be further configured to store a hot word sublist or a hot word list. The memory may be any type of memory. This is not limited in embodiments of this application.

The speech recognition device 310 may further include a communication interface, and is communicatively connected to the input device 320 through the communication interface. The communication connection may be in a wired manner or a wireless manner. This is not limited in embodiments of this application.

FIG. 4 shows a speech recognition method 400 according to an embodiment of this application. The method may be applied to a cloud management platform. For example, the speech recognition method may be performed by the speech recognition device 310 in FIG. 3. The speech recognition method shown in FIG. 4 includes the following process.

Step 410: The cloud management platform obtains a to-be-recognized speech of a user.

For example, the to-be-recognized speech may be a communication recording sent or received by the user, or may be a conference recording, or may be a historical speech that needs to be analyzed. This is not limited in this application.

The cloud management platform is located in a cloud data center, and may provide an access interface (for example, an interface or an application programming interface (application programming interface, API)). A tenant can operate a client to remotely access the access interface to register a cloud account and a password on the cloud management platform and log in to the cloud management platform. After the cloud account and the password are successfully authenticated by the cloud management platform, the tenant can further pay to select and purchase a virtual machine of a specific specification (processor, memory, or disk) on the cloud management platform. After the purchasing with payment succeeds, the cloud management platform provides a remote login account and password of the purchased virtual machine, and the client can remotely log in to the virtual machine, and install and run an application of the tenant on the virtual machine. Therefore, the tenant can create, manage, log in to, and operate the virtual machine in the cloud data center by using the cloud management platform. The virtual machine may also be referred to as a cloud server (elastic compute service, ECS) or an elastic instance (different cloud service providers have different names).

In this embodiment of this application, the cloud management platform obtains user data uploaded by the tenant. Specifically, the tenant may upload the user data to the cloud management platform by using the client of the cloud management platform. The user data may include the to-be-recognized speech of the user.

Step 430: The cloud management platform obtains a hot word list of the user, where the hot word list of the user is generated by combining a plurality of hot word sublists, and different hot word sublists correspond to different relationship features of the user.

When the cloud management platform obtains the hot word list of the user, the hot word list may be obtained from the memory in the speech recognition device 310 in FIG. 3, or may be input by the input device 320 in FIG. 3. This is not limited in this application.

The relationship feature may include a personal relationship network of the user or a department, a workgroup, a company, or the like to which the user belongs, and may further include a social relationship such as a family or a group to which the user belongs. This is not limited in embodiments of this application. It should be understood that each user is usually in more contact with other persons within a specific range, and is in less contact with other persons outside the specific range. The specific range is referred to as a personal relationship network of the user.

The relationship feature may be a set of interpersonal relationships established between the user and other persons due to work or the like. For example, the relationship feature may include a personal relationship network of the user or a department, a workgroup, a company, or the like to which the user belongs. In this way, different relationship features may indicate close and distant relationships with the user, so that corresponding hot word sublists may indicate hot word probabilities at different levels for the user. A hot word list generated by combining such hot word sublists can effectively screen out an invalid hot word that is not closely related to the user, thereby effectively reducing a quantity of hot words in the hot word list, and improving speech recognition efficiency.

Step 450: The cloud management platform performs speech recognition on the to-be-recognized speech based on the hot word list.

If a hot word list that simply includes all hot words is used, as a service volume of the user increases, a quantity of hot words in the hot word list also increases. When the user performs speech recognition, speech recognition result matching needs to be performed on all the hot words in the hot word list. This greatly reduces a speech recognition speed. In this embodiment of this application, the hot word list is generated based on the relationship feature of the user, so that invalid hot words are reduced, and speech recognition efficiency can be improved without reducing recognition accuracy.

In a possible implementation, the plurality of hot word sublists include a first-level hot word sublist and a second-level hot word sublist, and when the hot word list of the user is generated through combination, the first-level hot word sublist takes precedence over the second-level hot word sublist.

That the first-level hot word sublist takes precedence over the second-level hot word sublist may include that a hot word in the first-level hot word sublist has a higher probability weight than a hot word in the second-level hot word list; or may include that when the first-level hot word sublist and the second-level hot word sublist have same-pronunciation hot words, in a process of combining the plurality of hot word sublists to generate the hot word list of the user, only the same-pronunciation hot word in the first-level hot word sublist is retained. It should be noted herein that the "same-pronunciation hot words" may include only hot words with a same pronunciation, but in another embodiment, may further include hot words with similar pronunciations. A reason is as follows: In consideration of features such as an accent, a tone, or a pronunciation manner of a person, fuzzy matching may need to be performed on some pronunciations to more accurately restore a real meaning expression of a user. For example, a user may read "Zhang Qian(1)" and "Zhang Qian(4)" with a same pronunciation/similar pronunciations, or read "Liu Ning" and "Niu Ling" with a same pronunciation/similar pronunciations, or may read "Wang Sen" and "Wang Seng" with a same pronunciation/similar pronunciations. In embodiments of this application, when hot word sublists are combined, such hot words may be considered as "same-pronunciation hot words" for priority processing.

The hot word sublists may have different priorities. After being combined into the hot word list, a hot word in a hot word sublist with a higher priority is preferentially retained, or has a higher probability value or weight value. In this way, a quantity of invalid hot words can be further reduced. As a service volume of the user increases, a quantity of hot words in the hot word list also increases, and same-pronunciation hot words may occur in the hot word list. During speech recognition, the same-pronunciation hot words may conflict with each other, and speech recognition accuracy is reduced. In embodiments of this application, priorities of the plurality of hot word sublists are determined based on the different relationship features, thereby avoiding a conflict between same-pronunciation hot words. For example, if interaction between the user and a colleague "Zhang San" (which, for example, belongs to the first-level hot word sublist) in a same department is much more than interaction between the user and a colleague "Zhangsan" (which, for example, belongs to the second-level hot word sublist) in another department in a same enterprise, when the two hot word sublists are combined, only the hot word "Zhang San" may be retained, or a probability value or a weight value of the hot word "Zhang San" may be made greater than that of the hot word "Zhangsan". In this way, speech recognition accuracy is improved, and speech recognition efficiency is further improved.

In a possible implementation, that different hot word sublists correspond to different relationship features of the user includes: The first-level hot word sublist corresponds to the personal relationship network of the user, and the second-level hot word sublist corresponds to a first group to which the user belongs.

It should be understood that each user is usually in more contact with other persons within a specific range, and is in less contact with other persons outside the specific range. The specific range is referred to as a personal relationship network of the user.

The personal relationship network of the user may include another user that the user has contacted in a specific period of time, or may include another user in a same group as the user, for example, another user in a same department as the user. The personal relationship network of the user may further include a record of communication between the user and another user in a specific period of time. This is not limited in this application.

The first group to which the user belongs may be a department, a workgroup, or the like to which the user belongs, or may be a company or the like to which the user belongs.

The second-level hot word sublist may be maintained by an administrator of the first group, or may be determined by using an algorithm based on a communication record of the first group.

For example, the second-level hot word sublist may be a hot word sublist of the department to which the user belongs, and may be maintained by an administrator of the department. Business scopes of a large/medium-sized company have a relatively wide span, but business content in a same department is relatively centralized. Therefore, a hot word in the hot word sublist usually corresponds to a result that the user expects to output through speech recognition. For example, it is assumed that a department A to which the user belongs is responsible for a memory development service, and "unified storage" is a proper noun commonly used in the department A. An administrator of the department A maintains a hot word sublist of the department A, and inputs "unified storage" into the hot word sublist of the department A. During speech recognition, the hot word list of the user includes a proper noun commonly used in the department A, such as "unified storage". In this way, speech recognition accuracy can be improved, and speech recognition efficiency can be further improved.

The personal relationship network is a network that has a closest personal relationship with the user. Therefore, an occurrence probability of a hot word related to the personal relationship network is the highest in the speech. For example, in a specific period of time, a quantity of other persons that the user has contacted is limited, and information about the other persons is usually a result that the user expects to output through speech recognition. Therefore, a higher priority should be set. For example, the information about the other persons may include a name, a nickname, an address, and the like, and may also include a keyword used when the user communicates with the other persons. For another example, personal life or work of the user relates to some common proper nouns such as a personal address, an office address, and a common work phrase. Such information is also a result that the user expects to output through speech recognition, and therefore has a higher priority. In addition, service information or a member name of a group to which the user belongs is also usually a result that the user expects to output through speech recognition, for example, a group name (such as a marketing department or a sales department), a floor on which the group is located, or a name of another department that frequently communicates with the group. In embodiments of this application, the first-level hot word sublist is determined based on the personal relationship network of the user, and the second-level hot word sublist is determined based on the first group to which the user belongs. This can also reduce invalid hot words, and improve speech recognition efficiency.

In a possible implementation, the method further includes: The cloud management platform analyzes the personal relationship network of the user by using a clustering algorithm and/or a keyword obtaining algorithm, to determine the first-level hot word sublist.

For example, the clustering algorithm may be a k-means (k-means clustering) algorithm, a CLARA (large-scale application clustering) algorithm, or the like. This is not limited in this application.

For example, information about another user that the user has contacted in a specific period of time may be analyzed by using the k-means algorithm, and information about another user that is in a same group as the user may also be analyzed by using the k-means algorithm. For example, a name of a person who is in frequent contact with the user recently may be obtained by using the k-means algorithm, and the first-level hot word sublist may be determined based on the name of the person.

For example, the keyword obtaining algorithm may be a term frequency-inverse document frequency (term frequency-inverse document frequency, TF-IDF) algorithm, a Text Rank algorithm, or a latent Dirichlet allocation (latent Dirichlet allocation) algorithm. Alternatively, the keyword obtaining algorithm may be a word vector keyword extraction algorithm, for example, a word2vec algorithm. This is not limited in this application.

For example, a record of communication between the user and another user in a specific period of time may be analyzed by using the TF-IDF algorithm, to obtain keywords of the record of communication between the user and the another user in the specific period of time, and the first-level hot word list may be determined based on these keywords.

The personal relationship network of the user is analyzed by using the clustering algorithm (for example, the k-means algorithm) and/or the keyword obtaining algorithm (for example, the TF-IDF algorithm), to obtain a proper noun of another person that is closely related to the user in a specific period of time, for example, a person name, a personal address, an office address, or a common work phrase. Such information is also a result that the user expects to output through speech recognition. In this way, speech recognition accuracy can be improved, invalid hot words can be reduced, and speech recognition efficiency can be improved.

In a possible implementation, the clustering algorithm and/or the keyword obtaining algorithm may be periodically performed.

Because the personal relationship network of the user changes slightly, the clustering algorithm is performed once at a long interval, so that computing resources and signaling resources can be saved.

In a possible implementation, the method further includes: The cloud management platform analyzes, by using the keyword obtaining algorithm, a communication record of the first group to which the user belongs, to determine the second-level hot word sublist.

For example, the keyword obtaining algorithm may be a term frequency-inverse document frequency (term frequency-inverse document frequency, TF-IDF) algorithm, a Text Rank algorithm, or a latent Dirichlet allocation (latent Dirichlet allocation) algorithm. Alternatively, the keyword obtaining algorithm may be a word vector keyword extraction algorithm, for example, a word2vec algorithm. This is not limited in this application.

For example, keywords of the communication record of the first group to which the user belongs may be obtained by using the TF-IDF algorithm, and the second-level hot word list may be determined based on these keywords.

The communication record of the first group to which the user belongs is analyzed by using the keyword obtaining algorithm (for example, the TF-IDF algorithm), to obtain keywords such as a service term, a person name, and a group name that are closely related to the user. Because the first group to which the user belongs is closely related to the user, these keywords are usually a result that the user expects to output through speech recognition. In this way, speech recognition accuracy can be improved, invalid hot words can be reduced, and speech recognition efficiency can be improved.

In a possible implementation, the method further includes: The cloud management platform receives a maintenance instruction of an administrator of the first group for the second-level hot word sublist; and the cloud management platform maintains the second-level hot word sublist based on the maintenance instruction.

The second-level hot word sublist is maintained by the administrator of the first group, so that the second-level hot word sublist includes hot words such as a service term, a person name, and a group name that are more commonly used by a user in the first group in actual work or life, so that speech recognition accuracy is improved, invalid hot words are reduced, and speech recognition efficiency is improved.

Embodiments of this application are not limited to the first group. A person skilled in the art may set more groups, for example, a second group and a third group. All solutions fall within the scope of embodiments of this application, provided that different hot word sublists correspond to different relationship features of the user.

For example, in embodiments of this application, a third-level hot word sublist and a second group to which the user belongs are further included. The third-level hot word sublist corresponds to the second group to which the user belongs, and the first-level hot word sublist and the second-level hot word sublist take precedence over the third-level hot word sublist. For example, the third-level hot word sublist may correspond to a company to which the user belongs.

Specifically, in some possible implementations, the hot word list of the user is generated by combining hot word sublists of three priorities, the personal relationship network of the user corresponds to the first-level hot word sublist, the department to which the user belongs corresponds to the second-level hot word sublist, and the company to which the user belongs corresponds to the third-level hot word sublist. The first-level hot word sublist may be determined through analysis based on the personal relationship network of the user by using the k-means algorithm, the second-level hot word sublist may be maintained by a department administrator of the department to which the user belongs, and the third-level hot word sublist may be maintained by a company administrator of the company to which the user belongs.

If a hot word list that simply includes all hot words is used, as a service volume of the user increases, a quantity of hot words in the hot word list also increases. When the user performs speech recognition, speech recognition result matching needs to be performed on all the hot words in the hot word list. This greatly reduces a speech recognition speed. In this embodiment of this application, the hot word list is generated based on the relationship feature of the user, so that invalid hot words are reduced, and speech recognition efficiency can be improved without reducing recognition accuracy.

A person skilled in the art may understand that, in this embodiment of this application, the first-level hot word sublist is not limited to being determined based on only the personal relationship network of the user. All solutions fall within the scope of embodiments of this application, provided that different hot word sublists correspond to different relationship features of the user.

In a possible implementation, that different hot word sublists correspond to different relationship features of the user includes: The first-level hot word sublist corresponds to a second group to which the user belongs, and the second-level hot word sublist corresponds to a third group to which the user belongs.

It should be understood that the second group and the third group may be different sets. For example, the second group may be a proper subset of the third group, or may be a set that intersects with the third group.

In a possible implementation, the second group is a proper subset of the third group.

For example, the second group to which the user belongs may be a department, a workgroup, or the like to which the user belongs, and the third group may be a company or the like to which the user belongs.

The first-level hot word sublist and the second-level hot word sublist may be respectively maintained by administrators of the second group and the third group, or may be respectively determined based on communication records of the second group and the third group by using an algorithm. This is not limited in this application.

For example, the second group to which the user belongs may be a department to which the user belongs, and the third group to which the user belongs may be a company to which the user belongs. A department administrator and a company administrator may respectively maintain the first-level hot word sublist and the second-level hot word sublist according to requirements. For example, maintenance may be based on a sub-account of the department to which the user belongs and a root account of the company to which the user belongs. The sub-account of the department can be used to maintain the first-level hot word sublist, and the root account of the company can be used to maintain the second-level hot word sublist.

For example, the second group to which the user belongs may include a workgroup to which the user belongs, and the third group to which the user belongs may include a department to which the user belongs. The first-level hot word sublist may be maintained by a workgroup administrator, and the second-level hot word sublist may be maintained by a department administrator.

Service information or a member name of a group to which the user belongs is usually a result that the user expects to output through speech recognition, for example, a group name (such as a marketing department or a sales department), a floor on which the group is located, or a name of another department that frequently communicates with the group. In this embodiment of this application, the first-level hot word sublist is determined based on the second group to which the user belongs, and the second-level hot word sublist is determined based on the third group to which the user belongs, so that invalid hot words are reduced, and speech recognition efficiency can be improved without reducing speech recognition accuracy.

In a possible implementation, that the first-level hot word sublist corresponds to a second group to which the user belongs includes: The first-level hot word sublist is determined by analyzing, by using the keyword obtaining algorithm, a communication record of the second group to which the user belongs.

It should be understood that the keyword obtaining algorithm may be a term frequency-inverse document frequency (term frequency-inverse document frequency, TF-IDF) algorithm, a Text Rank algorithm, or a latent Dirichlet allocation (latent Dirichlet allocation) algorithm. Alternatively, the keyword obtaining algorithm may be a word vector keyword extraction algorithm, for example, a word2vec algorithm. This is not limited in this application.

For example, a keyword of the communication record of the second group to which the user belongs may be obtained by using the TF-IDF algorithm, and the first-level hot word list may be determined based on the keyword.

The communication records of the second group and the third group to which the user belongs are separately analyzed by using the keyword obtaining algorithm (for example, the TF-IDF algorithm), to obtain keywords such as a service term, a person name, and a group name that are closely related to the user. Because the second group and the third group to which the user belongs are closely related to the user, these keywords are usually a result that the user expects to output through speech recognition. In this way, speech recognition accuracy can be improved, invalid hot words can be reduced, and speech recognition efficiency can be improved.

It should be understood that embodiments of this application are not limited to the second group and the third group. A person skilled in the art may set more groups, for example, a fourth group and a fifth group. All solutions fall within the scope of embodiments of this application, provided that different hot word sublists correspond to different relationship features of the user.

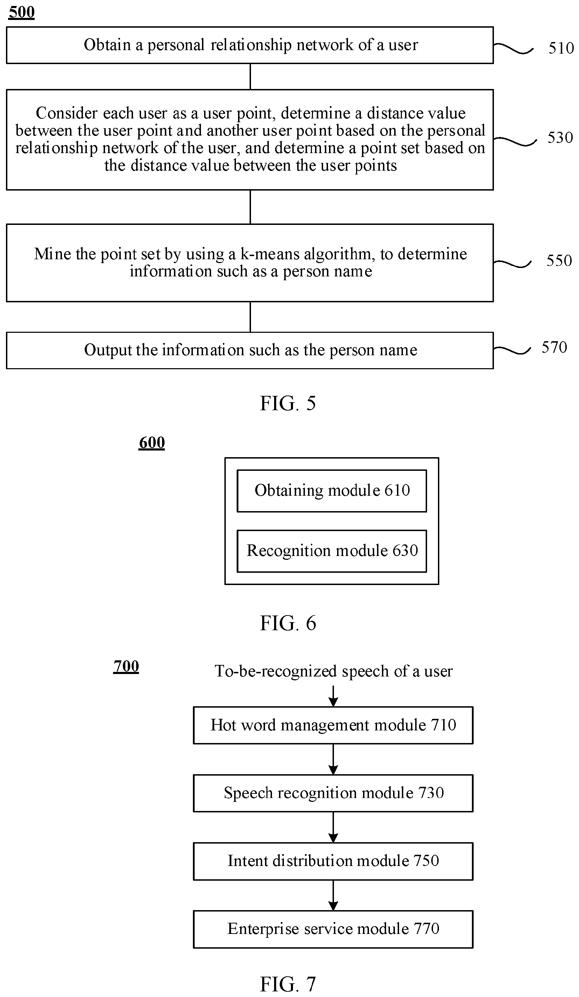

For example, a method 500 for analyzing a personal relationship network of a user by using a clustering algorithm is shown in FIG. 5.

Refer to FIG. 5. The method 500 for analyzing a personal relationship network of a user by using a clustering algorithm includes the following process.

Step 510: A cloud management platform obtains a personal relationship network of a user.

Step 530: The cloud management platform considers each user as a user point, determines a distance value between the user point and another user point based on the personal relationship network of the user, and determines a point set based on the distance value between the user points.

For example, determining the distance value between the user point and the another user point based on the personal relationship network of the user may include: determining the distance value between the user point and the another user point based on features such as a quantity of times of interaction between the user and another user in a specific period of time and a quantity of common groups.

For example, the point set may be determined based on the distance value between the user point and the another user point through weighted calculation.

Step 550: The cloud management platform mines the point set by using a k-means algorithm, to determine information such as a person name.

For example, a value of k may be appropriately selected to mine the point set by using the k-means algorithm.

Step 570: The cloud management platform outputs the information such as the person name.

For example, the method 500 shown in FIG. 5 may be performed by the speech recognition device 310 in FIG. 3. This is not limited in this application.

The personal relationship network of the user is analyzed by using the clustering algorithm (for example, the k-means algorithm), to obtain a proper noun of another person that is closely related to the user in a specific period of time, for example, a person name, a personal address, or an office address. Such information is also a result that the user expects to output through speech recognition. In this way, speech recognition accuracy can be improved, invalid hot words can be reduced, and speech recognition efficiency can be improved.

The foregoing describes the method embodiments in embodiments of this application in detail with reference to FIG. 4 and FIG. 5. The following describes an apparatus embodiment in embodiments of this application with reference to FIG. 6. The apparatus embodiment corresponds to the method embodiments. Therefore, for parts that are not described in detail, refer to the foregoing method embodiments. An apparatus may implement any possible implementation of the foregoing methods.

FIG. 6 shows a speech recognition apparatus according to an embodiment of this application. The apparatus is used in a cloud management platform. The apparatus 600 may perform the speech recognition method in the foregoing embodiments of this application. For example, the apparatus 600 may be the foregoing speech recognition device 310.

As shown in FIG. 6, the apparatus 600 may include:
an obtaining module 610, configured to obtain a to-be-recognized speech of a user and a hot word list of the user, where the hot word list of the user is generated by combining a plurality of hot word sublists, and different hot word sublists correspond to different relationship features of the user; and
a recognition module 630, configured to perform speech recognition on the to-be-recognized speech based on the hot word list.

For example, the obtaining module 610 may be located in a processor or a memory of the input device 320 or the speech recognition device 310 shown in FIG. 3. This is not limited in embodiments of this application. The recognition module 630 may be located in the processor of the speech recognition device 310 shown in FIG. 3.

Refer to FIG. 6. Both the obtaining module 610 and the recognition module 630 may be implemented by using software, or may be implemented by using hardware. For example, the following uses the obtaining module 610 as an example to describe an implementation of the obtaining module 610. Similarly, for an implementation of the recognition module 630, refer to the implementation of the obtaining module 610.

The module is used as an example of a software functional unit, and the obtaining module 610 may include code that is run on a computing instance. The computing instance may include at least one of a physical host (computing device), a virtual machine, and a container. Further, there may be one or more computing instances. For example, the obtaining module 610 may include code that is run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with close geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. For cross-region communication between two VPCs in a same region and between VPCs in different regions, a communication gateway needs to be disposed in each VPC, and interconnection between the VPCs is implemented through the communication gateway.

The module is used as an example of a hardware functional unit, and the obtaining module 610 may include at least one computing device, for example, a server. Alternatively, the obtaining module 610 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the obtaining module 610 may be distributed in a same region, or may be distributed in different regions. A plurality of computing devices included in the obtaining module 610 may be distributed in a same AZ, or may be distributed in different AZs. Similarly, a plurality of computing devices included in the obtaining module 610 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the obtaining module 610 may be configured to perform any step in the speech recognition method, the recognition module 630 may be configured to perform any step in the speech recognition method, steps implemented by the obtaining module 610 and the recognition module 630 may be specified as required, and the obtaining module 610 and the recognition module 630 separately implement different steps in the speech recognition method to implement all functions of the speech recognition apparatus.

In a possible implementation, the plurality of hot word sublists include a first-level hot word sublist and a second-level hot word sublist, and when the obtaining module generates the hot word list of the user through combination, the first-level hot word sublist takes precedence over the second-level hot word sublist.

The hot word sublists may have different priorities. After being combined into the hot word list, a hot word in a hot word sublist with a higher priority is preferentially retained, or has a higher probability value or weight value. In this way, a quantity of invalid hot words can be further reduced. As a service volume of the user increases, a quantity of hot words in the hot word list also increases, and same-pronunciation hot words may occur in the hot word list. During speech recognition, the same-pronunciation hot words may conflict with each other, and speech recognition accuracy is reduced. In embodiments of this application, priorities of the plurality of hot word sublists are determined based on the different relationship features, thereby avoiding a conflict between same-pronunciation hot words. For example, if interaction between the user and a colleague "Zhang San" (which, for example, belongs to the first-level hot word sublist) in a same department is much more than interaction between the user and a colleague "Zhangsan" (which, for example, belongs to the second-level hot word sublist) in another department in a same enterprise, when the two hot word sublists are combined, only the hot word "Zhang San" may be retained, or a probability value or a weight value of the hot word "Zhang San" may be made greater than that of the hot word "Zhangsan". In this way, speech recognition accuracy is improved, and speech recognition efficiency is further improved.

In a possible implementation, the first-level hot word sublist corresponds to a personal relationship network of the user, and the second-level hot word sublist corresponds to a first group to which the user belongs.

The personal relationship network is a network that has a closest personal relationship with the user. Therefore, an occurrence probability of a hot word related to the personal relationship network is the highest in the speech. For example, in a specific period of time, a quantity of other persons that the user has contacted is limited, and information about the other persons is usually a result that the user expects to output through speech recognition. Therefore, a higher priority should be set. For example, the information about the other persons may include a name, a nickname, an address, and the like, and may also include a keyword used when the user communicates with the other persons. For another example, personal life or work of the user relates to some common proper nouns such as a personal address, an office address, and a common work phrase. Such information is also a result that the user expects to output through speech recognition, and therefore has a higher priority. In addition, service information or a member name of a group to which the user belongs is also usually a result that the user expects to output through speech recognition, for example, a group name (such as a marketing department or a sales department), a floor on which the group is located, or a name of another department that frequently communicates with the group. In embodiments of this application, the first-level hot word sublist is determined based on the personal relationship network of the user, and the second-level hot word sublist is determined based on the first group to which the user belongs. This can also reduce invalid hot words, and improve speech recognition efficiency.

In a possible implementation, the obtaining module is further configured to analyze the personal relationship network of the user by using a clustering algorithm and/or a keyword obtaining algorithm, to determine the first-level hot word sublist.

The personal relationship network of the user is analyzed by using the clustering algorithm (for example, the k-means algorithm) and/or the keyword obtaining algorithm (for example, the TF-IDF algorithm), to obtain a proper noun of another person that is closely related to the user in a specific period of time, for example, a person name, a personal address, an office address, or a common work phrase. Such information is also a result that the user expects to output through speech recognition. In this way, speech recognition accuracy can be improved, invalid hot words can be reduced, and speech recognition efficiency can be improved.

In a possible implementation, the obtaining module is further configured to analyze, by using the keyword obtaining algorithm, a communication record of the first group to which the user belongs, to determine the second-level hot word sublist.

The communication record of the first group to which the user belongs is analyzed by using the keyword obtaining algorithm (for example, the TF-IDF algorithm), to obtain keywords such as a service term, a person name, and a group name that are closely related to the user. Because the first group to which the user belongs is closely related to the user, these keywords are usually a result that the user expects to output through speech recognition. In this way, speech recognition accuracy can be improved, invalid hot words can be reduced, and speech recognition efficiency can be improved.

In a possible implementation, the speech recognition apparatus further includes: a receiving module, configured to receive a maintenance instruction of an administrator of the first group for the second-level hot word sublist; and the obtaining module is further configured to maintain the second-level hot word sublist based on the maintenance instruction.

The second-level hot word sublist is maintained by the administrator of the first group, so that the second-level hot word sublist includes hot words such as a service term, a person name, and a group name that are more commonly used by a user in the first group in actual work or life, so that speech recognition accuracy is improved, invalid hot words are reduced, and speech recognition efficiency is improved.

In a possible implementation, that different hot word sublists correspond to different relationship features of the user includes: The first-level hot word sublist corresponds to a second group to which the user belongs, the second-level hot word sublist corresponds to a third group to which the user belongs, and the second group is a proper subset of the third group.

Service information or a member name of a group to which the user belongs is usually a result that the user expects to output through speech recognition, for example, service information or a member name of a group to which the user belongs is usually a result that the user expects to output through speech recognition, for example, a group name (such as a marketing department or a sales department), a floor on which the group is located, or a name of another department that frequently communicates with the group. In this embodiment of this application, the first-level hot word sublist is determined based on the second group to which the user belongs, and the second-level hot word sublist is determined based on the third group to which the user belongs, so that invalid hot words are reduced, and speech recognition efficiency can be improved without reducing speech recognition accuracy.

FIG. 7 shows a system architecture and an application procedure of the system architecture according to an embodiment of this application. Refer to FIG. 7. A system 700 may include a hot word management module 710, a speech recognition module 730, an intent distribution module 750, and an enterprise service module 770. For example, the hot word management module 710 may include a personal relationship network extraction module, a first group hot word module, and a second group hot word module. The speech recognition module 730 may include a speech-to-text conversion module and a text-to-speech conversion module. For example, the intent distribution module 750 may include an FAQ question and answer module, an interesting chat module, and a task-based skill module. For example, the enterprise service module 770 may include a page jumping module, a chatbot module, and an enterprise service invoking module. The foregoing modules are merely used as examples for description, and do not constitute a limitation on this application. Refer to FIG. 7. The system 700 may be a voice assistant system in an instant messenger (instant messenger, IM) system, and may be used in a large/medium-sized company. However, an application scenario of this application is not limited thereto.

For example, a voice assistant may be a functional module in an instant messaging/OA application of a large/medium-sized company, and implements functions of intelligent dialog and instant question and answer by using artificial intelligence technologies such as speech recognition/synthesis and natural language processing and generation. For example, a sub-user sends an instruction "search for emails of Zhang San" by using a speech, and the voice assistant recognizes an intent expressed by the sub-user and performs a corresponding function in an application.

Refer to FIG. 7. A user sends a speech message to the system 700, and speech recognition is performed and a service is completed by using the hot word management module 710, the speech recognition module 730, the intent distribution module 750, and the enterprise service module 770. It should be understood that the speech message may include a speech instruction, and the speech message may carry a to-be-recognized speech.

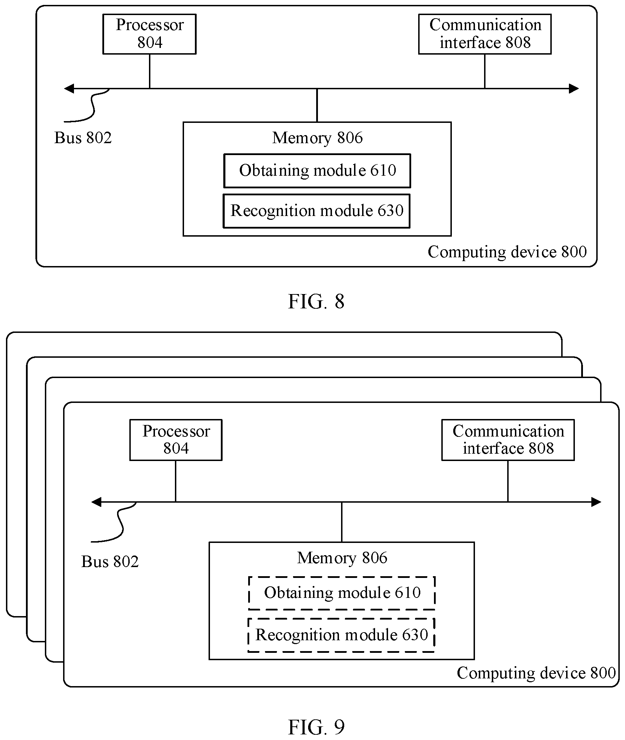

This application further provides a computing device 800. As shown in FIG. 8, the computing device 800 includes a bus 802, a processor 804, a memory 806, and a communication interface 808. The processor 804, the memory 806, and the communication interface 808 communicate with each other through the bus 802. The computing device 800 may be a server or a terminal device. It should be understood that quantities of processors and memories in the computing device 800 are not limited in this application.

The bus 802 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representation in FIG. 8, but this does not mean that there is only one bus or only one type of bus. The bus 802 may include a path for transmitting information between the components (for example, the memory 806, the processor 804, and the communication interface 808) of the computing device 800.

The processor 804 may include any one or more of the following processors: a central processing unit (central processing unit CPU), a graphics processing unit (graphics processing unit, GPU), a microprocessor (microprocessor, MP), a digital signal processor (digital signal processor DSP), or the like.

The memory 806 may include a volatile memory (volatile memory), for example, a random access memory (random access memory, RAM). The memory 806 may further include a non-volatile memory (non-volatile memory), for example, a read-only memory (read-only memory, ROM), a flash memory, a mechanical hard disk drive (hard disk drive, HDD), or a solid state drive (solid state drive, SSD).

The memory 806 stores executable program code, and the processor 804 executes the executable program code to separately implement functions of the obtaining module 410 and the recognition module 430, so as to implement the speech recognition method. In other words, the memory 806 stores instructions for performing the speech recognition method.

The communication interface 808 uses a transceiver module, for example, but not limited to, a network interface card or a transceiver, to implement communication between the computing device 800 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 9, the computing device cluster includes at least one computing device 800. Memories 806 in one or more computing devices 800 in the computing device cluster may store same instructions for performing the speech recognition method.

In some possible implementations, the memories 806 in the one or more computing devices 800 in the computing device cluster may alternatively separately store some instructions for performing the speech recognition method. In other words, a combination of the one or more computing devices 800 may jointly execute the instructions for performing the speech recognition method.

It should be noted that memories 806 in different computing devices 800 in the computing device cluster may store different instructions respectively used to perform some functions of a speech recognition apparatus. In other words, instructions stored in memories 806 in different computing devices 800 may implement functions of one or more modules in the obtaining module 410 and the recognition module 430.

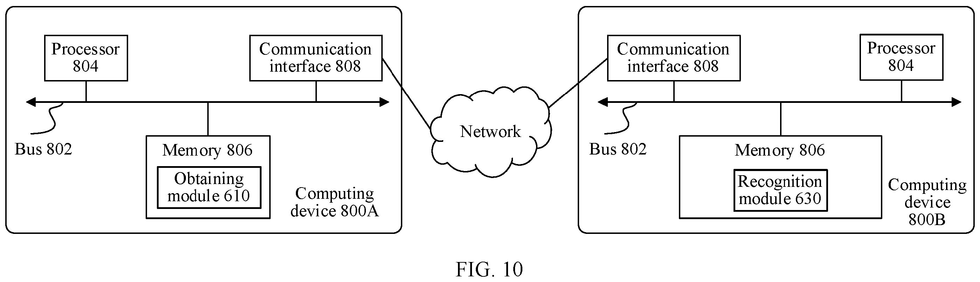

In some possible implementations, the one or more computing devices in the computing device cluster may be connected through a network. The network may be a wide area network, a local area network, or the like. FIG. 10 shows a possible implementation. As shown in FIG. 10, two computing devices 800A and 800B are connected through a network. Specifically, each computing device is connected to the network through a communication interface of the computing device. In this possible implementation, a memory 806 in the computing device 800A stores instructions for performing a function of the obtaining module 410. In addition, a memory 806 in the computing device 800B stores instructions for performing a function of the recognition module 430.

A connection manner between computing device clusters shown in FIG. 10 may be: Considering that in the speech recognition method provided in this application, a large quantity of to-be-recognized speeches need to be stored, and the to-be-recognized speeches need to be recognized, it is considered that a function implemented by the recognition module 430 is performed by the computing device 800B.

It should be understood that a function of the computing device 800A shown in FIG. 10 may also be completed by a plurality of computing devices 800. Similarly, a function of the computing device 800B may also be completed by a plurality of computing devices 800.

An embodiment of this application further provides another computing device cluster. For a connection relationship between computing devices in the computing device cluster, refer to the connection manner in the computing device cluster in FIG. 9 and FIG. 10 similarly. A difference lies in that memories 806 in one or more computing devices 800 in the computing device cluster may store same instructions for performing the speech recognition method.

In some possible implementations, the memories 806 in the one or more computing devices 800 in the computing device cluster may alternatively separately store some instructions for performing the speech recognition method. In other words, a combination of the one or more computing devices 800 may jointly execute the instructions for performing the speech recognition method.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the speech recognition method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a computing device to perform the speech recognition method.

A person of ordinary skill in the art may be aware that, in combination with the examples described in embodiments disclosed in this specification, modules and algorithm steps can be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and module, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the modules is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces, and indirect couplings or communication connections between apparatuses or modules may be implemented in an electrical, mechanical, or another form.

The modules described as separate parts may or may not be physically separate, and parts displayed as modules may or may not be physical modules, may be located in one place, or may be distributed on a plurality of network modules. Some or all of the modules may be selected according to an actual requirement to achieve the objectives of the solutions in the embodiments.

In addition, functional modules in embodiments of this application may be integrated into one processing module, or each module may exist alone physically, or two or more modules may be integrated into one module.

When the function is implemented in a form of a software functional module and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely used to describe the technical solutions of the present invention, but not limit the technical solutions of the present invention. Although the present invention is described in detail with reference to the foregoing embodiments, persons of ordinary skill in the art should understand that they may still modify the technical solutions described in the foregoing embodiments, or perform equivalent replacement on some technical features thereof. However, these modifications or replacements do not make the essence of the corresponding technical solutions depart from the protection scope of the technical solutions in embodiments of the present invention.

## Claims

1. A speech recognition method, wherein the method is applied to a cloud management platform, and the method comprises:
Obtaining, by the cloud management platform, a to-be-recognized speech of a user;
Obtaining, by the cloud management platform, a hot word list of the user, wherein the hot word list of the user is generated by combining a plurality of hot word sublists, and different hot word sublists correspond to different relationship features of the user; and
Performing, by the cloud management platform, speech recognition on the to-be-recognized speech based on the hot word list.

2. The speech recognition method according to claim **1,** wherein the plurality of hot word sublists comprise a first-level hot word sublist and a second-level hot word sublist, and when the hot word list of the user is generated through combination, the first-level hot word sublist takes precedence over the second-level hot word sublist.

3. The speech recognition method according to claim 2, wherein that different hot word sublists correspond to different relationship features of the user comprises:
the first-level hot word sublist corresponds to a personal relationship network of the user, and the second-level hot word sublist corresponds to a first group to which the user belongs.

4. The speech recognition method according to claim 3, wherein the method further comprises:
analyzing, by the cloud management platform, the personal relationship network of the user by using a clustering algorithm and/or a keyword obtaining algorithm, to determine the first-level hot word sublist.

5. The speech recognition method according to claim 3 or 4, wherein the method further comprises:
analyzing, by the cloud management platform by using the keyword obtaining algorithm, a communication record of the first group to which the user belongs, to determine the second-level hot word sublist.

6. The speech recognition method according to claim 3 or 4, wherein the method further comprises:
receiving, by the cloud management platform, a maintenance instruction of an administrator of the first group for the second-level hot word sublist; and
maintaining, by the cloud management platform, the second-level hot word sublist based on the maintenance instruction.

7. The speech recognition method according to claim 2, wherein that different hot word sublists correspond to different relationship features of the user comprises:
the first-level hot word sublist corresponds to a second group to which the user belongs, the second-level hot word sublist corresponds to a third group to which the user belongs, and the second group is a proper subset of the third group.

8. A speech recognition apparatus, wherein the apparatus is used in a cloud management platform, and the apparatus comprises:
an obtaining module, configured to obtain a to-be-recognized speech of a user and a hot word list of the user, wherein the hot word list of the user is generated by combining a plurality of hot word sublists, and different hot word sublists correspond to different relationship features of the user; and
a recognition module, configured to perform speech recognition on the to-be-recognized speech based on the hot word list.

9. The speech recognition apparatus according to claim 8, wherein the plurality of hot word sublists comprise a first-level hot word sublist and a second-level hot word sublist, and when the obtaining module generates the hot word list of the user through combination, the first-level hot word sublist takes precedence over the second-level hot word sublist.

10. The speech recognition apparatus according to claim 9, wherein the first-level hot word sublist corresponds to a personal relationship network of the user, and the second-level hot word sublist corresponds to a first group to which the user belongs.

11. The speech recognition apparatus according to claim 10, wherein the obtaining module is further configured to analyze the personal relationship network of the user by using a clustering algorithm and/or a keyword obtaining algorithm, to determine the first-level hot word sublist.

12. The speech recognition apparatus according to claim 10 or 11, wherein the obtaining module is further configured to analyze, by using the keyword obtaining algorithm, a communication record of the first group to which the user belongs, to determine the second-level hot word sublist.

13. The speech recognition apparatus according to claim 10 or 11, wherein the apparatus further comprises:
a receiving module, configured to receive a maintenance instruction of an administrator of the first group for the second-level hot word sublist; and
the obtaining module is further configured to maintain the second-level hot word sublist based on the maintenance instruction.

14. The speech recognition apparatus according to claim 9, wherein the first-level hot word sublist corresponds to a second group to which the user belongs, the second-level hot word sublist corresponds to a third group to which the user belongs, and the second group is a proper subset of the third group.

15. A computing device, comprising a processor and a memory, wherein the processor is configured to execute instructions stored in the memory, to enable the computing device to perform the method according to any one of claims 1 to 7.

16. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 7.

17. A computer program product comprising instructions, wherein when the instructions are run by a computing device, the computing device is enabled to perform the method according to any one of claims 1 to 7.

18. A computer program product comprising instructions, wherein when the instructions are run by a computing device cluster, the computing device cluster is enabled to perform the method according to any one of claims 1 to 7.

19. A computer-readable storage medium, comprising computer program instructions, wherein when the computer program instructions are executed by a computing device, the computing device performs the method according to any one of claims 1 to 7.

20. A computer-readable storage medium, comprising computer program instructions, wherein when the computer program instructions are executed by a computing device cluster, the computing device cluster performs the method according to any one of claims 1 to 7.
